# EUROPÄISCHE PATENTSCHRIFT

(11) **EP 0 690 959 B1**
(45) Veröffentlichungstag und Bekanntmachung des Hinweises auf die Patenterteilung: **22.07.1998**
(21) Anmeldenummer: 94906923.1
(22) Anmeldetag: 08.02.1994
(51) Int. Cl.: F04B 53/14

(54) **PUMPE**
PUMP
POMPE

(30) Priorität: 27.02.1993 DE 4306221
(43) Veröffentlichungstag der Anmeldung: 10.01.1996
(73) Patentinhaber: ITT Automotive Europe GmbH, 60488 Frankfurt (DE)
(72) Erfinder: WUPPER, Hans, D-61381 Friedrichsdorf (DE); ZAVISKA, Dalibor, D-65760 Eschborn (DE)
(86) Internationale Anmeldenummer: EP9400356
(87) Internationale Veröffentlichungsnummer: WO9419607

(56) Entgegenhaltungen:
- DE-A- 3 742 824
- DE-C- 834 172

## Beschreibung

Die Erfindung betrifft eine Pumpe, insbesondere zur Druckmittelförderung in hydraulischen Bremsanlagen mit Schlupfregelung nach dem Oberbegriff des Anspruchs 1.

Aus der DE 37 42 824 A1 ist bereits eine Pumpe bekannt geworden, die über einen Pumpkolben verfügt, der innerhalb des Pumpengehäuses in einer Laufbuchse geführt ist. Die Laufbuchse nimmt vom Pumpkolben und Kompressionsraum abgewandt den Ventilsitz für das Druckventil auf. Das Saugventil ist innerhalb des Kompressionsraums am Pumpkolben angeordnet und über einen kolbenseitigen Zulaufkanal mit einer Druckmittelquelle verbunden. Das Druckventil ist in einem Haltekörper angeordnet, der mittels einer Lancierung an der Laufbuchse befestigt ist, die gleichfalls den Ventilsitz zur Aufnahme des Druckventils aufweist. Dies hat den Nachteil, daß der Haltekörper zusammen mit der Laufbuchse als vormontierte Einheit nur außerhalb des Pumpengehäuses prüfbar ist und konfugentioniert werden kann, was u.a. auch die Austauschbarkeit der Einzelteile beeinträchtigt.

Daher ist es die Aufgabe der Erfindung, eine Pumpe der vorgenannten Art dahingehend weiter zu entwickeln, daß bei möglichst einfacher, kompakter Bauweise eine Dichtigkeitsprüfung des Druckventils sowohl außerhalb wie auch innerhalb des Pumpengehäuses gewährleistet ist, wobei bei Bedarf eine einfache Austauschbarkeit von Einzelteilen, wie beispielweise das Auswechseln des Druckventils oder des Ventilsitzkörpers sichergestellt ist, wenn eine Leckage während des Prüfvorgangs auftritt.

Diese Aufgabe wird erfindungsgemäß durch die den Patentanspruch 1 kennzeichnenden Merkmale gelöst, wonach die dem Deckel zugewandte Mantelfläche des Ventilsitzkörpers mit einer konischen Anfasung versehen ist, an der ein ringförmiger Vorsprung des Deckels dichtend anlegbar und durch axiale Verschiebung radial zu einer Preßverbindung gegen die Konische Anfasung aufweitbar ist.

Durch die in den Unteranprüchen aufgezeigten Maßnahmen sind zweckmäßige Ausbildungen der Erfindung angegeben, die im Zusammenhang mit den weiteren Merkmalen und Vorteilen der Erfindung nachfolgend anhand mehrerer Zeichnungen näher dargestellt und erläutert werden.

Es zeigen:
- Figur 1: einen Längs-Halbschnitt einer in einer Teilansicht gezeigten Pumpe zur Erläuterung der Ventil- und Deckelmontage während der Funktions- und Dichtigkeitsprüfung,
- Figur 2: die Endposition der in Figur 1 gezeigten Montageelemente nach der Fertigstellung,
- Figur 3: eine weitere Ausgestaltung des in den Figuren 1 und 2 gezeigten Verschlußdeckels und des Ventilsitzes.

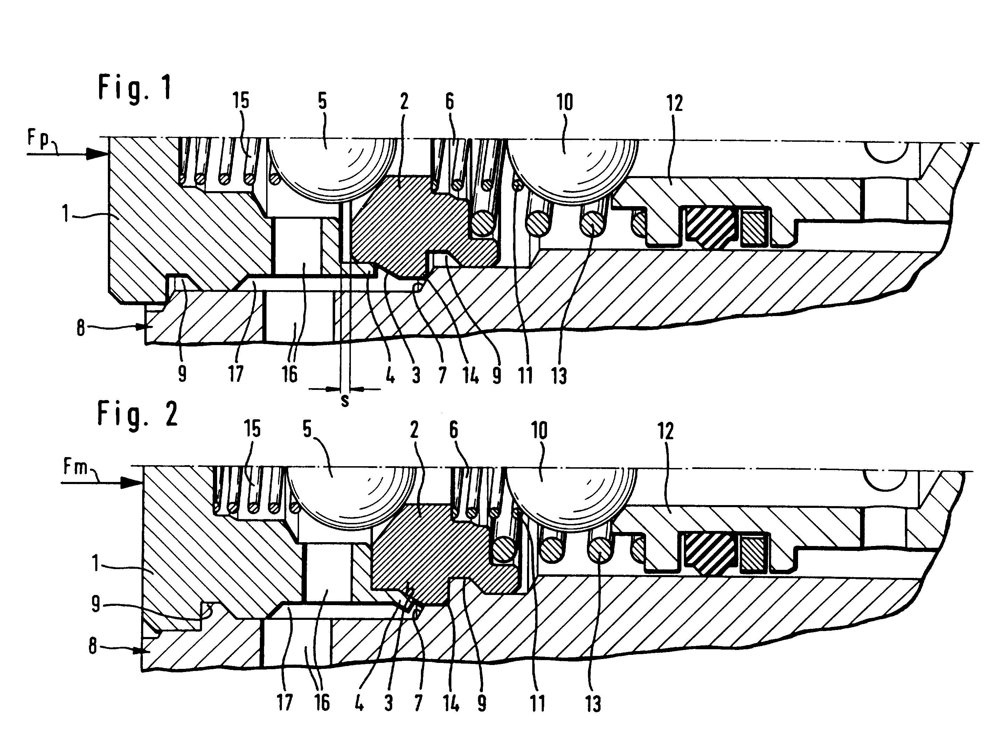

Die Figur 1 weist eine koaxiale Hintereinanderschaltung des Saugventils 10 und des Druckventils 5 innerhalb des Pumpenzylinders und damit innerhalb des Pumpengehäuses 8 auf. Das Saugventil 10 wird infolge der Wirkung einer Druckfeder 11 in Richtung auf den am Pumpkolben 12 angeordneten Ventil sitz gedrückt. Eine weitere, parallel zur ersten Druckfeder angeordnete Druckfeder 13 innerhalb des Kompressionsraums 6 kontaktiert zum Zwecke der Kolbenrückstellung die Stirnfläche des Pumpkolbens 12. Beide Druckfedern 11, 13 stützen sich mit ihren entgegengesetzten Windungsenden an einem Ventilsitzkörper 2 ab, der unter Druckkraftwirkung eines als Druckventil-Stützkörpers ausgebildeten Deckels 1 mit seiner Dichtkante 14 an der Bohrungsstufe 7 des Pumpenzylinders angepreßt ist. Die zur Dichtigkeitsprüfung des Druckventils 5 eingeleitete Druckkraft Fp wird über einen ringförmig am Umfang des Deckels 1 umlaufenden Vorsprung 4 auf eine konische Anfasung 3 des Ventilsitzkörpers 2 übertragen. In der abbildungsgemäßen Montagestellung des Deckels 1 gegenüber dem Ventilsitzkörper 2, trennt bereits das von einer Druckfeder 15 beaufschlagte Druckventil 5 den Kompressionsraum 6 vom Anschluß 16 des Druckmittelverbrauchers. Hierbei verbleibt zunächst ein axiales Spiel s zwischen den Stirnflächen des Deckels 1 und des Ventilsitzkörpers 2, um im weiteren Verlauf der Montage den Deckel 1 im Pumpengehäuse 8 befestigen zu können. In der gezeigten Deckelposition ist zunächst eine Hinterschneidung 9 am Außenbereich des Deckels 1 als ringförmig umlaufende Dichtkante 14 wirksam, um während der Einleitung des Prüfdrucks über den Anschluß 16 eine Leckage zur Atmosphäre zu verhindern.

Die Figur 2 zeigt den Deckel 1 und den Ventilsitzkörper 2 nach Aufbringen der Montagekraft Fm in ihrer Endposition. Die Montagekraft Fm ist vom Betrage her um das zur Verformung des Vorsprungs 4 in die Hinterschneidung 9 des Deckels 1 und des Ventilsitzkörpers 2 zu verdrängenden Pumpengehäusematerial größer als die Prüfkraft Fp. Das ursprüngliche zwischen dem Deckel 1 und dem Ventilsitzkörper 2 vorhandene axiale Spiel s ist zwangsläufig unter Aufweitung des ringförmigen Vorsprungs 4 völlig ausgeglichen. Alle weiteren in Figur 2 nicht detailliert erläuterten Bauteile sind gemäß Figur 1 identisch und mit den gleichen Bezugszeichen versehen.

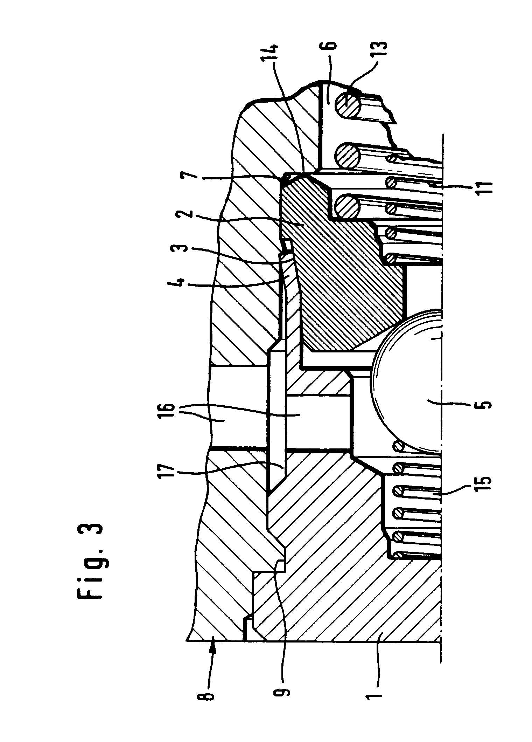

Die Figur 3 zeigt abweichend von Figur 2 eine zweckmäßige Ausgestaltung des Erfindungsgedankens, wonach der Vorsprung 4 des Deckels 1 verlängert ist, um über die konische Anphasung 3 des Ventilsitzkörpers 2 hinaus unter Keilwirkung in die Zylinderwandung des Pumpengehäuses 8 eindringen zu können. Diese keilförmige Einscherung verhindert unter allen Umständen eine Leckage von Druckmittel aus dem Kompressionsraum 6 über die Dichtkante 14 des Ventilsitzkörpers 2 zum Anschluß 16 des Druckmittelverbrauchers. Unter Wirkung der Prüf- bzw. Montagekraft Fp, Fm gelangt die Dichtkante 14 des Ventilsitzkörpers 2 in Form einer stirnseitig umlaufenden Schneide an der Bohrungsstufe 7 zur Anlage, so daß eine metallische Abdichtung zustande kommt. Die hydraulische Verbindung des Kompressionsraum 6 zum Anschluß 16 ist somit ausschließlich über das Druckventil 5 möglich. Der Anschluß 16 zum Druckmittelverbraucher durchdringt abbildungsgemäß als Radialöffnung den Vorsprung 4 im Deckel 1. Die Radialöffnung kann aber auch alternativ im Ventilsitzkörper 2 angeordnet sein, um eine hydraulische Verbindung zwischen dem vom Druckventil 5 gesteuerten Auslaß 16 und dem zwischen dem Deckel 1 und dem Pumpengehäuse 8 gelegenen Ringraum 17 herzustellen.

Durch die Erfindung ist eine Pumpe geschaffen, die sich durch eine Minimierung der Teileanzahl, einer vereinfachten, zuverlässigen Abdichtung auszeichnet und eine einfache, sichere, dichte Befestigung des Ventilsitzkörpers und des Deckels gewährleistet.

Die Hochdruckprüfung der Pumpe ist auf einfache Weise durch Andrücken der Patrone (Deckel, Druckventil und Ventilsitzkörper) an die Dichtkanten vor der Endmontage möglich. Bei fehlerhaften Teilen kann die Patrone oder Elemente der Patrone ausgetauscht werden. Für die Prüfung des Druckventils 5 werden die Dichtkanten 14 des Deckels 1 und des Ventilsitzkörpers 2 mit genügend Anpreßdruck an das Pumpengehäuse 8 gedrückt, wobei sich der Axialabstand der Dichtkanten an das Gehäuse anpaßt. Dies wird durch das Spiel s im Preßverband ermöglicht. Der Anpreßdruck des Ventilsitzkörpers 2 entspricht dem Reibungs- und Verformungswiderstand in der Verbindungsstelle zwischen dem Ventilsitzkörper 2 und dem Verschlußdeckel 1. Beim Einstemmvorgang der Patrone wird die Montagekraft Fm erhöht und das Gehäusematerial wird in die Nuten am Deckel und am Ventilsitzkörper eingeformt.

### Bezugszeichenliste

- 1: Deckel
- 2: Ventilsitzkörper
- 3: Anfasung
- 4: Vorsprung
- 5: Druckventil
- 6: Kompressionsraum
- 7: Bohrungsstufe
- 8: Pumpengehäuse
- 9: Hinterschneidung
- 10: Saugventil
- 11: Druckfeder
- 12: Pumpkolben
- 13: Druckfeder
- 14: Dichtkante
- 15: Druckfeder
- 16: Anschluß
- 17: Ringraum

## Patentansprüche

1. Pumpe, insbesondere zur Druckmittelförderung in hydraulischen Bremsanlagen mit Schlupfregelung, mit einem in einem Pumpenzylinder geführten Pumpkolben (12), der in einem Kompressionsraum (6), der im Zulauf des Pumpenzylinders angeordnet ist, ein Saugventil (10) aufweist, mit einem am Auslaß des Kompressionsraums (6) angeordneten Druckventil (5), das eine Druckmittelverbindung zum Druckmittelverbraucher aufweist, wobei das Druckventil (5) zwischen einem den Pumpenzylinder verschließenden Deckel (1) und einem Ventilsitzkörper (2) im Pumpengehäuse (8) angeordnet ist, dadurch **gekennzeichnet,** daß der dem Deckel (1) zugewandte Bereich des Ventilsitzkörpers (2) mit einer konischen Anfasung (3) versehen ist, an der ein ringförmiger Vorsprung (4) des Deckels (1) dichtend anlegbar und durch axiale Verschiebung radial zu einer Preßverbindung gegen die Konische Anfasung (3) aufweitbar ist.

2. Pumpe nach Anspruch 1, dadurch **gekennzeichnet,** daß der dem Druckventil (5) zugewandte Bereich des Kompressionsraums (6) mit einer erweiterten Bohrungsstufe (7) versehen ist, an der der Ventilsitzkörper (2) mit seinem dem Druckventil (5) abgewandten Endbereich axial anlegbar und abgedichtet ist.

3. Pumpe nach Anspruch 1 oder 2, dadurch **gekennzeichnet,** daß der Ventilsitzkörper (2) als zwischen der Bohrungsstufe (7) und dem Deckel (1) einspannbares sowie als im wesentlichen scheibenförmiges Druckstück ausgebildet ist.

4. Pumpe nach mindestens einem der vorhergehenden Ansprüche, dadurch **gekennzeichnet,** daß der Vorsprung (4) des Deckels (1) radial aufweitbar und plastisch verformbar ist und mit einem erweiterten Bereich einer Bohrungsstufe des Pumpengehäuses (8) eine Keilbefestigung bildet.

5. Pumpe nach mindestens einem der vorhergehenden Ansprüche 1 bis 4, dadurch **gekennzeichnet,** daß der Deckel (1) mittels einer Selbstverstemmung im Pumpengehäuse (8) gehalten ist.

6. Pumpe nach einem der vorhergehenden Ansprüche, dadurch **gekennzeichnet,** daß der Ventilsitzkörper (2) an seiner Mantelfläche mit einer Hinterschneidung (9) versehen ist, in die das Material des Pumpengehäuses (8) verdrängbar ist.

## Claims

1. Pump, in particular pump for the pressure fluid supply in hydraulic brake systems with slip control, which includes a pump piston (12) guided in a pump cylinder and having a suction valve (10) in a compression chamber (6) that is arranged in the supply line of the pump cylinder, a pressure valve (5) which is arranged at an outlet of the compression chamber (6) and has a pressure fluid connection to the pressure fluid consumer, wherein the pressure valve (5) is interposed between a cover (1) closing the pump cylinder and a valve seat member (2) in the pump housing (8),
**characterized** in that the area of the valve seat member (2) close to the cover (1) has a conical chamfer (3) onto which an annular projection (4) of the cover (1) is movable into sealing abutment and, by axial displacement, is radially expandable to provide a press fit engagement in relation to the conical chamfer (3).

2. Pump as claimed in claim 1,
**characterized** in that the area of the compression chamber (6) facing the pressure valve (5) has an expanded bore step (7) on which the valve seat member (2) with its end area remote from the pressure valve (5) is axially abuttable and sealed.

3. Pump as claimed in claim 1 or 2,
**characterized** in that the valve seat member (2) is provided as a substantially disc-shaped pressure member adapted to be clamped between the bore step (7) and the cover (1).

4. Pump as claimed in at least one of the preceding claims, **characterized** in that the projection (4) of the cover (1) is radially expandable and plastically deformable and forms a wedge-type attachment along with an expanded area of a bore step of the pump housing (8).

5. Pump as claimed in at least one of the preceding claims 1 to 4,
**characterized** in that the cover (1) is retained in the pump housing (8) by means of self-calking.

6. Pump as claimed in any one of the preceding claims,
**characterized** in that the peripheral surface of the valve seat member (2) has an undercut (9) into which the material of the pump housing (8) is deformable.

## Revendications

1. Pompe, notamment pour la mise en circulation d'un agent de pression dans un système de freinage hydraulique à régulation du glissement, comprenant un piston de pompe (12), guidé dans un cylindre de pompe et comportant un obturateur de valve d'aspiration (10) dans une chambre de compression (6) ménagée dans l'entrée du cylindre de pompe, et un obturateur de valve de refoulement (5) disposé à la sortie de la chambre de compression (6) et présentant une liaison d'agent de pression vers l'utilisateur d'agent de pression, l'obturateur de valve de refoulement (5) étant disposé entre un couvercle (1) fermant le cylindre de pompe et un corps de siège de valve (2), dans le boîtier de pompe (8), caractérisé en ce que la zone du corps de siège de valve (2) qui fait face au couvercle (1) présente un chanfrein conique (3) sur lequel une saillie annulaire (4) du couvercle (1) peut prendre appui d'une manière étanche et peut être élargie radialement, sous l'effet d'un déplacement axial, de façon à former un joint à ajustement serré contre le chanfrein conique (3).

2. Pompe suivant la revendication 1, caractérisée en ce que la partie de la chambre de compression (6) qui est située du côté de l'obturateur de valve de refoulement (5) est pourvue d'un épaulement d'alésage élargi (7) sur lequel le corps de siège de valve (2) peut prendre appui axialement, d'une manière étanche, par sa partie d'extrémité située du côté opposé à l'obturateur de valve de refoulement (5).

3. Pompe suivant la revendication 1 ou 2, caractérisée en ce que le corps de siège de valve (2) est réalisé sous forme d'une pièce de compression pouvant être serrée entre l'épaulement d'alésage (7) et le couvercle (1) et se présentant essentiellement en forme de disque.

4. Pompe suivant au moins l'une des revendications précédentes, caractérisée en ce que la saillie (4) du couvercle (1) peut s'élargir radialement et se déformer plastiquement et forme une fixation par effet de coin avec la partie plus large délimitée par l'épaulement d'alésage du boîtier de pompe (8).

5. Pompe suivant au moins l'une des revendications précédentes 1 à 4, caractérisée en ce que le couvercle (1) est maintenue au moyen d'un matage réalisé par lui-même dans le boîtier de pompe (8).

6. Pompe suivant l'une des revendications précédentes, caractérisée en ce que le corps de siège de valve (2) est pourvu, sur sa surface périphérique, d'une partie en contre-dépouille (9) dans laquelle la matière du boîtier de pompe (8) peut être refoulée.
